# EUROPÄISCHE PATENTSCHRIFT

(11) **EP 2 180 974 B1**
(45) Veröffentlichungstag und Bekanntmachung des Hinweises auf die Patenterteilung: **23.11.2011**
(21) Anmeldenummer: 08774019.7
(22) Anmeldetag: 17.07.2008
(51) Int. Cl.: B23Q 5/40, B23Q 11/12, F16H 25/20, F16H 57/04

(54) **SPINDELMOTOR**
SPINDLE MOTOR
MOTEUR DE BROCHE

(30) Priorität: 16.08.2007 DE 102007038852
(43) Veröffentlichungstag der Anmeldung: 05.05.2010
(73) Patentinhaber: SEW-EURODRIVE GmbH & Co. KG, 76646 Bruchsal (DE)
(72) Erfinder: DITTES, Gerhard, 75053 Gondelsheim (DE)
(86) Internationale Anmeldenummer: PCT/EP2008/005844
(87) Internationale Veröffentlichungsnummer: WO 2009/021591

(56) Entgegenhaltungen:
- WO-A-02/093716
- DE-A1- 4 202 510
- DE-A1- 10 235 078
- GB-A- 699 778
- US-A- 4 232 562

## Beschreibung

Die Erfindung betrifft einen Spindelmotor.

Aus der DE 102 35 078 A1 ist ein Spindelmotor bekannt, der nur ein begrenztes Fettvolumen aufweist und somit eine geringe Standzeit.

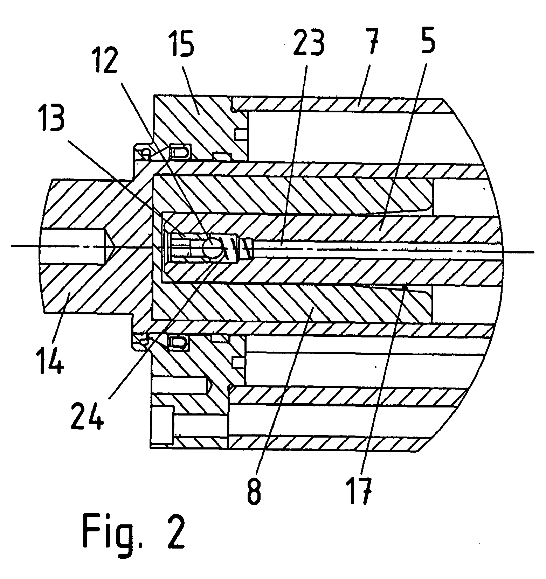

Aus der DE 10 2007 014 714 ist ein Spindelmotor bekannt, der eine Schmierstoffzuführung 21 in der dortigen Figur 2 aufweist. Er muss zeitweise nachgeschmiert werden.

Aus der WO 02/093716 A ist ein Spindelmotor bekannt, umfassend einen Elektromotor mit einem Rotor, der mit einer Gewindespindel verbunden ist, deren Gewinde mit einem Gewinde einer mit einer Kolbenstange verbundenen Spindelmutter im Eingriff steht, wobei die Spindelmutter mit Kolbenstange axial geführt ist in einem Gehäuseteil, wobei zur axialen Führung ein Führungsteil mit der Spindelmutter und der Kolbenstange verbunden ist.

Aus dem Katalog der Firma Dichtomatik sind Hochdruckdichtungen aus dem Fachgebiet der Hydraulik bekannt, wie beispielsweise eine PTFE-Nutringdichtung mit einer V-Feder aus Stahl, dort mit MA47 bezeichnet. Außerdem ist eine weitere Hochdruckdichtung bekannt, wie das Produkt WCP21, welche eine Radial-Wellendichtung mit einer PTFE-Dichtlippe und einer Elastomervorspannscheibe darstellt, die zwischen zwei Metallkäfigen geklemmt sind.

Der Erfindung liegt daher die Aufgabe zugrunde, bei einem Spindelmotor die Standzeit zu verlängern.

Erfindungsgemäß wird die Aufgabe bei dem Spindelmotor nach den in Anspruch 1 angegebenen Merkmalen gelöst.

Wichtige Merkmale der Erfindung bei dem Spindelmotor sind, dass er einen Elektromotor mit einem Rotor umfasst, der mit einer Gewindespindel verbunden ist, deren Gewinde mit einem Gewinde einer mit einer Kolbenstange verbundenen Spindelmutter im Eingriff steht,
wobei die Spindelmutter mit Kolbenstange axial geführt ist in einem Gehäusetell,
wobei zur axialen Führung ein Führungsteil mit der Spindelmutter und der Kolbenstange
verbunden ist,
wobei eine Schmiermittelpumpe derart In die die Gewindespindel integriert ist, dass die Gewindespindel mit anderen Bauteilen zusammen auch als Schmiermittelpumpe arbeitet,
Indem die Schmiermittelpumpe an dem vom Motor abgewandten Ende der Gewindespindel ein Ventil umfasst, das mit einem In der Gewindespindel angeordneten Schmierstoffkanal verbunden ist, insbesondere mit einem aus mindestens einer Schmierstoffbohrung zusammengesetzten Schmierstoffkanal,
wobei das Ventil zwischen einer Einlassöffnung und dem ersten Ende eines Schmierstoffkanals vorgesehen ist, Insbesondere Innerhalb der Gewindespindel,
wobei im Inneren des Spindelmotors, Insbesondere im Spindelbereich, abtriebsseitig vom Elektromotor ein Ölbad vorgesehen ist, in welches die Einlassöffnung mündet,
wobei der Schmierstoffkanal zumindest mit selnem zweiten Ende zwischen einer Dichtung und einem Lager mündet, insbesondere damit Schmierstoff der Dichtung und dem Lager zugeführt wird.

Von Vorteil ist dabei, dass ein ständiger Betrieb ohne Unterbrechung für Fettschmierungen und dergleichen ermöglicht ist. Außerdem ist eine besonders kompakte Bauart ermöglicht und geringe Reibungsverluste sind vorsehbar. Insbesondere ist eine Lebensdauerschmierung mittels Befüllen des Spindelbereiches mit einem Ölbad ermöglicht. Auch die Wärmeabfuhr ist verbessert, da die im Innern erzeugte Wärme besser aufgespreizt ist und somit die gesamte Oberfläche zur Wärmeabfuhr lokalbegrenzter Reibungsquellen und somit Wärmequellen nutzbar ist.

Da die Pumpe das Öl durch die Gewindespindel in axialer Richtung fördert, sind die Öl empfangenden Elemente auch dann versorgt, wenn die Einbaulage derart ist, dass sie oben angeordnet sind, also das Öl im Spindelbereich von ihnen wegfließt nach unten. Wenn jedoch die Einbaulage derart ist, dass die Schmiermittelpumpe kein Öl fördern kann, da im Ansaugbereich der Pumpe kein Öl vorhanden ist, sind die Elemente selbst im Ölbad eingetaucht, da sie dann unten sind. Somit ist eine Ölversorgung der Elemente unabhängig von der Einbaulage gegeben. Als Elemente sind Lager und Dichtungen, wie Wellenringe und dergleichen schmiermittelbetriebene Elemente vorsehbar.

Bei Ein- und Ausfahren der Kolbenstange werden Druckänderungen erzeugt. Hierzu ist der Spindelbereich gegen den Raumbereich des Elektromotors und gegen die Umgebung entsprechend abgedichtet mit Dichtungen, die einen Überdruck von mehr als 2 bar zu abdichten in der Lage sind. Im Folgenden werden diese Dichtungen auch als Hochdruckdichtungen bezeichnet.

Bei einer vorteilhaften Ausgestaltung ist im Inneren des Spindelmotors, insbesondere im Spindelbereich abtriebsseitig vom Elektromotor, das Ölbad vorgesehen. Insbesondere ist eine Dichtung zwischen dem Raumbereich des Elektromotors und dem Raumbereich, in welchem die Spindelmutter angeordnet ist, vorgesehen. Insbesondere ist zumindest eine Hochdruckdichtung zum Abdichten verwendet, insbesondere zwischen Spindelbereich und Elektromotor und/oder zwischen Spindelbereich und Umgebung. Von Vorteil ist dabei, dass im Elektromotor keine Ölbenetzung auftritt und seine Funktionsweise ungestört bleibt.

Bei einer vorteilhaften Ausgestaltung ist die Dichtung axial zwischen einem Lager der Gewindespindel und einer die Rotorwelle und die Gewindespindel verbindenden Kupplung angeordnet. Von Vorteil ist dabei, dass das Lager und die Dichtung vom Öl schmierbar sind.

Bei einer vorteilhaften Ausgestaltung ist die Kupplung eine axial steckbare Kupplung. Von Vorteil ist dabei, dass das Lösen und Wiederverbinden des Motors einfach und ohne

Aufwand ermöglicht ist. Außerdem treten beim Wechseln des Eleklromotors keine Ölverluste und Ölverschmutzungen auf.

Bei einer vorteilhaften Ausgestaltung ist die Dichtung als Wellendichtring ausgeführt, der in einem Gehäuseteil seinen Sitz hat, welches auch einen Sitz zur Aufnahme des Lagers der Gewindespindel aufweist,
wobei die Lauffläche des Wellendichtrings an der Gewindespindel vorgesehen ist. Von Vorteil ist dabei, dass eine kompakte Bauart erreichbar ist und das Gehäuseteil nur mit den zwei Sitzen zu bearbeiten ist. Außerdem gelangt Öl, das in den Bereich des Wellendichtrings gefördert wird einfach und leicht zum Lager.

Bei einer vorteilhaften Ausgestaltung weist die Gewindespindel eine Schulter zur Aufnahme von Axialkräften auf. Von Vorteil ist dabei, dass der Elektromotor vor Axialkräften geschützt bleibt. Außerdem ist somit die axial steckbare Kupplung zum Verbinden verwendbar, da bei Normalbetrieb die Kupplung geschützt ist vor Axialkräften. Wenn nun Motor und Spindel getrennt werden sollen, wird Axialkraft beim Abheben des Motors aufgebracht und somit die Kupplung getrennt.

Insbesondere Ist die Schulter am Innenring des für die Gewindespindel vorgesehenen Lagers abgestützt. Von Vorteil ist dabei, dass die Trennung des Motors über die steckbare Kupplung ermöglicht ist.

Bei einer vorteilhaften Ausgestaltung ist die Kolbenstange abtriebsseitig von einer schmierstoffbetriebenen Dichtungsanordnung abgedichtet zum abtriebsseitigen Gehäuseteil hin. Von Vorteil ist dabei, dass einfache und kostengünstige Dichtungen im Gegensatz zu trockenbetriebenen Dichtungen verwendbar sind.

Bei einer vorteilhaften Ausgestaltung umfasst die Dichtungsanordnung zumindest einen Abstreifer, einen O-Ring und/oder eine Nutdichtung. Von Vorteil ist dabei, dass schmierstoffbetriebene, insbesondere ölbetriebene Dichtelemente einsetzbar sind, die auch bei einem Überdruck von 2 bar oder mehr Dichtheit gewährleisten.

Bei einer vorteilhaften Ausgestaltung ist in der Kolbenstange eine Abstützung verbunden, insbesondere eingepresst. Von Vorteil ist dabei, dass die Gewindespindel abstützbar ist und somit mit sehr großer axialer Länge ausführbar ist.

Bei einer vorteilhaften Ausgestaltung ist die Abstützung als im Wesentlichen zylindrische Ausnehmung ausgeführt, wobei an ihrem offenen Endbereich eine Einführschräge für die Einfädelung der Gewindespindel vorgesehen ist. Von Vorteil ist dabei, dass geringe Reibung auftritt, insbesondere bei Verwendung von PTFE-Material, insbesondere also Teflon, für die Abstützung. Dabei ist die Gewindespindel aus Metall, insbesondere Stahl.

Bei einer vorteilhaften Ausgestaltung umfasst die Gewindespindel zumindest einen Schmierstoffkanal, insbesondere einen aus mindestens einer Schmierstoffbohrung zusammengesetzten. Von Vorteil ist dabei, dass Öl durchleitbar ist durch die Gewindespindel hindurch und an einem Ort ausleitbar ist, an welchem zu schmierende Elemente angeordnet sind.

Bei einer vorteilhaften Ausgestaltung umfasst die Gewindespindel an ihrem vom Motor abgewandten Ende ein Ventil, das mit dem Schmierstoffkanal verbunden ist. Von Vorteil ist dabei, dass mittels des Ventils schwankende Drucke ausnutzbar sind und in eine Pumpwirkung verwandelbar ist. Denn bei Überdruck über einem kritischen Wert an Druck öffnet das Ventil, bei unteren Druckwerten bleibt es geschlossen.

Bei einer vorteilhaften Ausgestaltung ist das Ventil zwischen einer Einlassöffnung und dem Schmierstoffkanal ist, insbesondere innerhalb der Gewindespindel. Von Vorteil ist dabei, dass mittels der erwähnten Pumpwirkung Öl durch den Schmierstoffkanal beförderbar ist und somit eine Schmierung von zu schmierenden Elementen ausführbar ist.

Bei einer vorteilhaften Ausgestaltung umfasst das Ventil zumindest eine von einer Feder gegen eine Öffnung gedrückte Kugel. Von Vorteil ist dabei, dass das Ventil mit einfachen und kostengünstigen Mitteln herstellbar ist.

Bei einer vorteilhaften Ausgestaltung mündet der Schmierstoffkanal zumindest mit seinem zweiten Ende derart im Bereich der Dichtung, dass Schmierstoff der Dichtung zugeführt wird. Von Vorteil ist dabei, dass Die Dichtung als Wellendichtring ausführbar ist und der mittels des Schmierstoffkanals herangeführte Schmierstoff die Dichtheit gewährleistet.

Bei einer vorteilhaften Ausgestaltung mündet der Schmierstoffkanal zumindest mit seinem zweiten Ende zwischen der Dichtung und dem Lager. Von Vorteil ist dabei, dass Schmierstoff der Dichtung und dem Lager zugeführt wird.

Bei einer vorteilhaften Ausgestaltung ist die Gewindespindel mit dem Rotor gelagert in einem Gehäuseteil des Elektromotors. Von Vorteil ist dabei, dass Lager einsparbar sind

Bei einer vorteilhaften Ausgestaltung ist zur axialen Führung ein Führungsteil mit der Spindelmutter und der Kolbenstange verbunden. Von Vorteil ist dabei, dass das Führungsteil die Funktion der Verbindung von Spindelmutter und Kolbenstange übernimmt sowie die Funktion der Führung in axialer Richtung.

Bei einer vorteilhaften Ausgestaltung ist das Führungsteil im Gehäuseteil axial geführt über Nutensteine, insbesondere Nutensteine, welche in einer Nut des Gehäuseteils axial bewegbar angeordnet sind. Von Vorteil ist dabei, dass kostengünstige einfache Elemente verwendbar sind.

Bei einer vorteilhaften Ausgestaltung ist der Rotor mit der Gewindespindel spielfrei verbunden, insbesondere mittels einer Schraubverbindung zusammen mit einer Klemmverbindung. Von Vorteil ist dabei, dass die axialen Positionen mit hoher Genauigkeit anfahrbar sind und dabei eine hohe Wiederholgenauigkeit erreichbar ist.

Bei einer vorteilhaften Ausgestaltung ist die Kolbenstange mittels einer Dichtung, insbesondere Stangendichtung, insbesondere Abstreifer, gegen ein Gehäuseteil abgedichtet ist. Von Vorteil ist dabei, dass das Innere des Spindelmotors schützbar ist, insbesondere also auch die Gewindebereiche der Gewindespindel und der Spindelmutter.

Bei einer vorteilhaften Ausgestaltung ist im Bereich der axialen Endpositionen, also Anschläge, des Führungsteils jeweils ein elastisches Element, insbesondere O-Ring, angeordnet zur Aufnahme kinetischer Energie beim Auftreffen auf die Endposition. Von Vorteil ist dabei, dass auch im Sicherheitsfall Zerstörungen vermieden werden.

Bei einer vorteilhaften Ausgestaltung ist das Führungsteil mit der Kolbenstange mittels Klemmverbindung verbunden. Von Vorteil ist dabei, dass eine spielfreie Verbindung ausgeführt ist.

Bei einer vorteilhaften Ausgestaltung umfasst die Klemmverbindung Spannmittel, mit welchen das Führungsteil derart verformbar ist, dass die Kolbenstange einklemmbar ist. Insbesondere sind die Spannmittel tangential ausgerichtet vorgesehen, insbesondere zum Verdrehsichern der Kolbenstange gegen das Führungsteil, Von Vorteil ist dabei, dass einfache und kostengünstige Elemente verwendbar sind.

Bei einer vorteilhaften Ausgestaltung sind drei Nutensteine am Umfang angeordnet. Von Vorteil ist dabei, dass nur eine geringe Anzahl von Nutensteinen notwendig ist.

Bei einer vorteilhaften Ausgestaltung ist ein Stellring vorgesehen, wobei mittels Schraubelementen ein Verspannen des Innenrings eines Lagers des Motors ausführbar ist. Darüber hinaus ist mittels weiterer Schraubelemente ein Erzeugen von Andruckkraft für die Klemmverbindung zwischen Gewindespindel und Rotor ausführbar. Von Vorteil ist dabei, dass in einfacher Weise eine spielfreie Verbindung erzeugbar ist.

Bei einer vorteilhaften Ausgestaltung weist der Rotor in einem axialen Endbereich einen oder mehrere Axialschlitze auf. Von Vorteil ist dabei, dass nur geringe Andruckkräfte zum Verspannen notwendig sind.

Bei einer vorteilhaften Ausgestaltung wird eine formschlüssige Verbindung zwischen Führungsteil und Kolbenstange mittels Spannmitteln vorgesehen. Als Spannmittel sind Spannstifte, also Spannhülsen, verwendbar, die in zylindrische Bohrungen eingesteckt sind. Für diese formschlüssige Verbindung ist an der Kolbenstange eine derartige Abflachung vorgesehen, dass die Spannstifte berührend umgeben sind und sich an diese Abflachungsoberfläche anschmiegen infolge ihrer durch elastische Verformung bedingten Anpresskraft. Dazu ist die Abflachung als Teil einer Oberfläche eines gedachten Zylinders ausgeführt. Von Vorteil ist dabei, dass nur geringe Andruckkräfte zum Verspannen notwendig sind.

Bei einer vorteilhaften Ausgestaltung weist die Gewindespindel an ihrem einen Endbereich einen Zapfen zum Zentrieren auf. Von Vorteil ist dabei, dass einfache und kostengünstige Zentriermittel vorgesehen sind und kein zusätzlicher Bauraum hierfür notwendig ist.

Bei einer vorteilhaften Ausgestaltung ist das Zentrierteil zum Zentrieren des Gehäuseteils am Motorflansch vorgesehen. Insbesondere ist das Zentrierteil zur Aufnahme eines elastischen Elementes vorgesehen. Von Vorteil ist dabei, dass ein elastischer Anschlag für das Führungselement vorsehbar ist.

Bei einer vorteilhaften Ausgestaltung ist die Kolbenstange an ihrer zur Umgebung hin vorgesehenen Oberfläche glatt ausgeführt. Von Vorteil ist dabei, dass keine Verschmutzungen ins Innere des Spindelmotors vordringen können, weil eine Abdichtung zum Gehäuseteil in einfacher und wirkungsvoller Weise ausführbar ist.

Bei einer vorteilhaften Ausgestaltung umfasst der Rotor Permanentmagnete, insbesondere der Spindelmotor nach dem Synchronmotor-Prinzip angetrieben ist. Von Vorteil ist dabei, dass hohe Kräfte erzeugbar sind. Weitere Vorteile ergeben sich aus den Unteransprüchen.

### Bezugszeichenliste

- 1: Motorgehäuse
- 2: Rotorwelle
- 3: Stator
- 4: Gehäuseteil
- 5: Gewindespindel
- 6: Spindelmutter
- 7: Gehäuseteil
- 8: Abstützung
- 9: Führungsring
- 10: Dichtring
- 11: Abstreifer
- 12: Kugel
- 13: Hülse
- 14: Kolbenstange
- 15: Gehäuseteil
- 16: Schulter zur Axialkraftaufnahme
- 17: Einführschräge
- 18: Lager
- 19: Dichtung, Wellendichtring
- 20: Klauenteil
- 21: Kunststoffstern
- 22: Klauenteil
- 23: Schmierstoffbohrung
- 24: Federelement
- 25: Führungsteil
- 26: Gewindering
- 30: Radialbohrung

Die Erfindung wird nun anhand von Abbildungen näher erläutert:

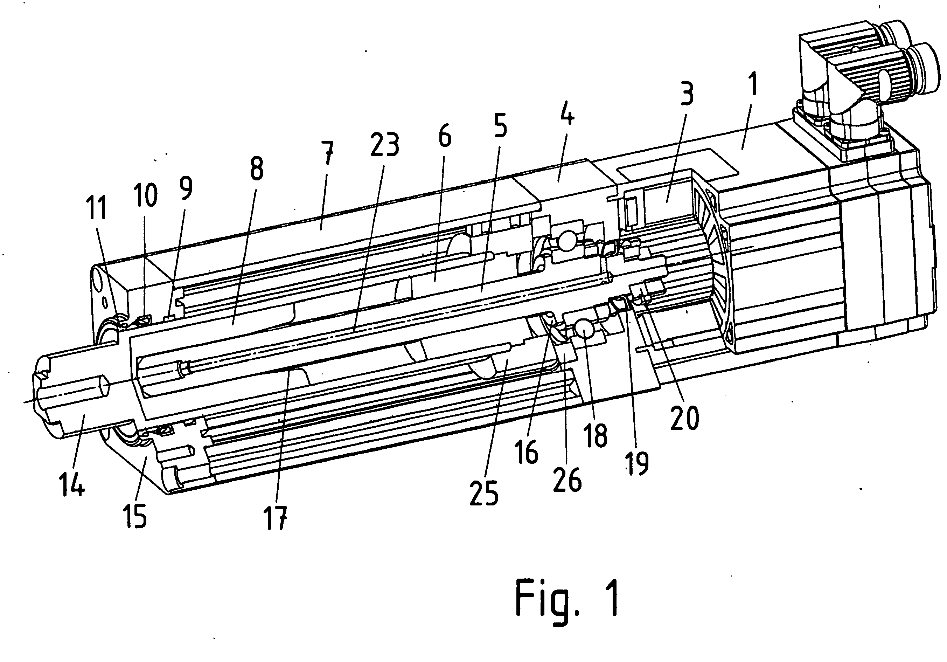

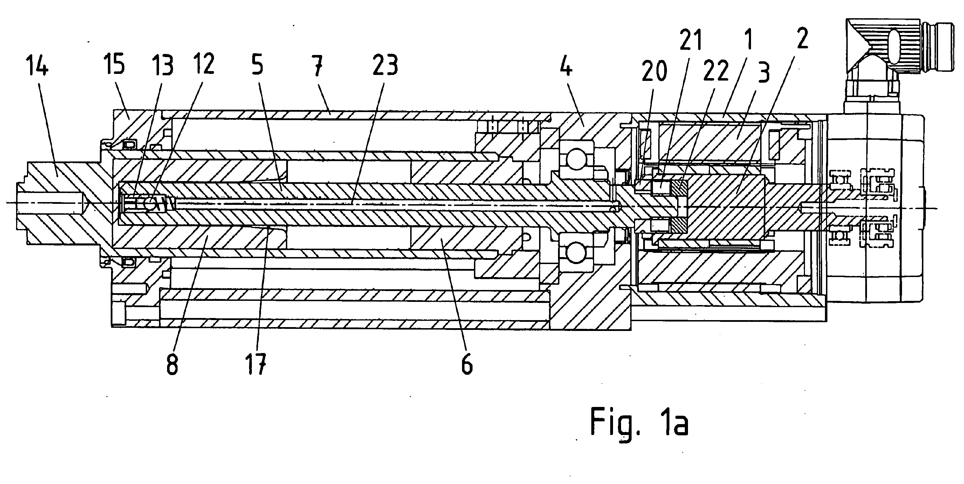

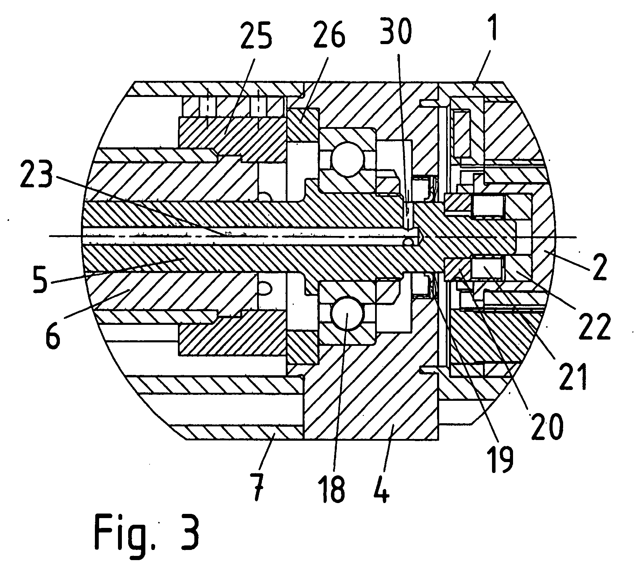

In der Figur 1 ist ein erfindungsgemäßer Spindelmotor in angeschnittener Schrägansicht und in Figur 1a in Schnittansicht gezeichnet. In Figur 2 und 3 sind jeweilige Ausschnitte hiervon vergrößert dargestellt.

Das Motorgehäuse 1 des Elektromotors, umfassend Rotorwelle 2 und Stator 3, ist mit den Gehäuseteilen 4, 7 und 15 des Spindelmotors dicht verbunden. Vorzugswiese ist an jeder Verbindungsschnittstelle der Gehäuseteile ein O-Ring miteingebracht, um Dichtheit auch gegen Überdruck, von mehr als beispielsweise 2 bar zu gewährleisten.

Das Gehäuseteil 4 nimmt das Lager 18 auf, über welches die Gewindespindel 5 gelagert ist. Diese ist Ober eine axial steckbare Kupplung mit der Rotorwelle 2 verbunden. Die Kupplung weist ein Klauenteil 20 und ein Klauenteil 22 auf, zwischen denen ein Kunststoffstern 21 angeordnet ist. Vorzugsweise ist diese Wellenkupplung spielfrei.

Eine im Gehäuseteil 4 angeordneter Dichtung 19 dichtet den Spindelinnenraum gegen den Motor hin ab

Somit ist der Innenraum mit Öl befüllbar. Abtriebsseitig ist die Kolbenstange 14 mittels Führungsring 9, Dichtring 10 und Abstreifer 11 abgedichtet gegen die Umgebung.

Die Dichtungen sind dabei derart gewählt, dass sie gegen Überdrucke von mehr als 2 bar Dichtheit gewährleisten.

Die Gewindespindel weist eine Schulter 16 auf, die Axialkräfte ableitet an das Lager 18.

Bei Drehen der Gewindespindel 5 wird die Spindelmutter 6 axial bewegt, weil sie über Führungsteile, wie Führungsteil 25 und 26 Gewindering 26, die mit Linearführvorrichtungen verbunden sind, linear geführt ist.

Zur Abstützung bei besonders langer Ausführung der Gewindespindel 5 ist eine Abstützung 8 aus Teflon vorgesehen, die eine zylindrische Bohrung aufweist zur Aufnahme der

Gewindespindel 5 und an ihrem offenen Ende eine Aufweitung aufweist, die in den Figuren 1 und 2 als Einführschräge 17 erkennbar ist.

Die Abstützung 8 ist pressverbunden in der Kolbenstange 14 und verliert den Kontakt zur Gewindespindel 5, wenn die Kolbenstange weit heraus gefahren wird. In diesem Fall ist jedoch auch die Spindelmutter weit verfahren und übernimmt die abstützende Funktion.

Beim Zurückfahren wird dann die Gewindespindel in die Einführschräge sozusagen eingefädelt.

Um die Gewindespindel 5 herum ist Schmierstoff vorgesehen, insbesondere Öl.

Dieses fließt insbesondere bei einer Einbaulage, in welcher die Kolbenstange 14 nach unten zeigt, zum entsprechenden axialen Endbereich. Wird nun der Spindelmotor hin und her gefahren, wird ein Ventil durch auftretenden lokalen Überdruck aktiviert. Hierzu wird die Kugel 12 von der Hülse 13 abgehoben und das Öl fließt durch die Hülse 13 an der Kugel 12 vorbei in die Schmierstoffbohrung 23 und wird bis zur Radialbohrung 30 befördert, wo es dann austritt im Bereich des Lagers 18 und der Dichtung 19.

Somit ist eine Schmierung in jeder Einbaulage gewährleistet.

Die geschilderte Ölpumpe ist wirksam, wenn die Kolbenstange nach unten also in Gravitationsrichtung weist. Wenn sie jedoch nach oben weist, fließt das Öl selbsttätig zum Lager 18 und der Dichtung 19.

Auch in dieser Montagerichtung des Spindelmotors ist wegen der zum Spindelinnraum hin offenen Ausführung des Gewindetriebs eine Schmierung des Gewindetriebs, des Führungsteils und der Nutensteine ausgeführt.

Die Kugel 12 wird bei Abbau des lokalen Überdrucks durch ein Federelement 24 in ihre Ausgangslage versetzt.

Das Ölbad verbessert die Wärmeabfuhr, da die Wärme besser aufgespreizt wird und somit die Gehäuseteile gleichmäßiger erwärmt sind vom Inneren her des Spindelmotorbereichs.

Als Dichtung ist vorzugsweise eine Hochdruckdichtung verwendet, wie beispielsweise eine WCP21 oder MA47.

## Patentansprüche

1. Spindelmotor,
umfassend einen Elektromotor mit einem Rotor, der mit einer Gewindespindel (5) verbunden ist, deren Gewinde mit einem Gewinde einer mit einer Kolbenstange (14) verbundenen Spindelmutter (6) im Eingriff steht,
wobei die Spindelmutter (6) mit Kolbenstange (14) axial geführt ist in einem Gehäuseteil, wobei zur axialen Führung ein Führungsteil mit der Spindelmutter (6) und der Kolbenstange (14)
verbunden ist,
**dadurch gekennzeichnet, dass**
eine Schmiermittelpumpe derart in die Gewindespindel (5) integriert ist, dass die Gewindespindel (5) mit anderen Bauteilen zusammen auch als Schmiermittelpumpe arbeitet,
indem die Schmiermittelpumpe an dem vom Motor abgewandten Ende der Gewindespindel (5) ein Ventil umfasst, das mit einem in der Gewindespindel (5) angeordneten Schmierstoffkanal verbunden ist, insbesondere mit einem aus mindestens einer Schmierstoffbohrung (23) zusammengesetzten Schmierstoffkanal,
wobei das Ventil zwischen einer Einlassöffnung und dem ersten Ende eines Schmierstoffkanals vorgesehen ist, insbesondere innerhalb der Gewindespindel (5),
wobei im Inneren des Spindelmotors, Insbesondere im Spindelbereich, abtriebsseitig vom Elektromotor ein Ölbad vorgesehen ist, in welches die Einlassöffnung mündet,
wobei der Schmierstoffkanal zumindest mit seinem zweiten Ende zwischen einer Dichtung und einem Lager mündet, Insbesondere damit Schmierstoff der Dichtung und dem Lager zugeführt wird.

2. Spindelmotor nach einem der vorangegangenen Ansprüche,
**dadurch gekennzeichnet, dass**
das Ventil zumindest eine von einer Feder gegen eine Öffnung gedrückte Kugel (12) umfasst.

3. Spindelmotor nach einem der vorangegangenen Ansprüche,
**dadurch gekennzeichnet, dass**
der Schmierstoffkanal zumindest mit seinem zweiten Ende derart im Bereich der Dichtung mündet, dass Schmierstoff der Dichtung zugeführt wird.

4. Spindelmotor nach einem der vorangegangenen Ansprüche,
**dadurch gekennzeichnet, dass**
zumindest eine Hochdruckdichtung zum Abdichten verwendet ist, insbesondere zwischen Spindelbereich und Elektromotor und/oder zwischen Spindelbereich und Umgebung.

5. Spindelmotor nach einem der vorangegangenen Ansprüche,
**dadurch gekennzeichnet, dass**
eine Dichtung zwischen dem Raumbereich des Elektromotors und dem Raumbereich, in welchem die Spindelmutter (6) angeordnet ist, vorgesehen ist.

6. Spindelmotor nach einem der vorangegangenen Ansprüche,
**dadurch gekennzeichnet, dass**
die Dichtung axial zwischen dem Lager der Gewindespindel (5) und einer die Rotorwelle (2) und die Gewindespindel (5) verbindenden Kupplung angeordnet ist.

7. Spindelmotor nach einem der vorangegangenen Ansprüche,
**dadurch gekennzeichnet, dass**
die Kupplung eine axial steckbare Kupplung ist.

8. Spindelmotor nach einem der vorangegangenen Ansprüche,
**dadurch gekennzeichnet, dass**
die Dichtung als Wellendichtring ausgeführt ist, der in einem Gehäuseteil seinen Sitz hat, welches auch einen Sitz zur Aufnahme des Lagers der Gewindespindel (5) aufweist, wobei die Lauffläche des Wellendichtrings an der Gewindespindel (5) vorgesehen ist.

9. Spindelmotor nach einem der vorangegangenen Ansprüche,
**dadurch gekennzeichnet, dass**
die Gewindespindel (5) eine Schulter zur Aufnahme von Axialkräften aufweist.

10. Spindelmotor nach einem der vorangegangenen Ansprüche,
**dadurch gekennzeichnet, dass**
die Schulter am Innenring des für die Gewindespindel (5) vorgesehenem Lagers abgestützt ist.

11. Spindelmotor nach einem der vorangegangenen Ansprüche,
**dadurch gekennzeichnet, dass**
die Kolbenstange (14) abtriebsseitig von einer schmierstoffbetriebenen Dichtungsanordnung abgedichtet ist zum abtriebsseitigen Gehäuseteil hin.

12. Spindelmotor nach einem der vorangegangenen Ansprüche,
**dadurch gekennzeichnet, dass**
die Dichtungsanordnung zumindest einen Abstreifer, einen O-Ring und/oder eine Nutdichtung umfasst.

13. Spindelmotor nach einem der vorangegangenen Ansprüche,
**dadurch gekennzeichnet, dass**
in der Kolbenstange (14) eine Abstützung (8) verbunden, insbesondere eingepresst, ist.

14. Spindelmotor nach einem der vorangegangenen Ansprüche,
**dadurch gekennzeichnet, dass**
die Abstützung (8) als im Wesentlichen zylindrische Ausnehmung ausgeführt ist, wobei an ihrem offenen Endbereich eine Einführschräge ()17 für die Einfädelung der Gewindespindel (5) vorgesehen ist.

15. Spindelmotor nach einem der vorangegangenen Ansprüche,
**dadurch gekennzeichnet, dass**
das Führungsteil (25) im Gehäuseteil axial geführt ist über Nutensteine, insbesondere Nutensteine welche in einer Nut des Gehäuseteils axial bewegbar angeordnet sind.

16. Spindelmotor nach einem der vorangegangenen Ansprüche,
**dadurch gekennzeichnet, dass**
die Gewindespindel (5) mit dem Rotor auch gelagert ist in einem Gehäuseteil des Elektromotors.

17. Spindelmotor nach einem der vorangegangenen Ansprüche,
**dadurch gekennzeichnet, dass**
der Rotor mit der Gewindespindel (5) spielfrei verbunden ist.

18. Spindelmotor nach einem der vorangegangenen Ansprüche,
**dadurch gekennzeichnet, dass**
im Bereich der axialen Endpositionen, also Anschläge, des Führungsteils (25) jeweils ein elastisches Element, insbesondere O-Ring, angeordnet ist zur Aufnahme kinetischer Energie beim Auftreffen auf die Endposition.

19. Spindelmotor nach einem der vorangegangenen Ansprüche,
**dadurch gekennzeichnet, dass**
das Führungsteil (25) mit der Kolbenstange (14) mittels Klemmverbindung verbunden ist.

20. Spindelmotor nach einem der vorangegangenen Ansprüche,
**dadurch gekennzeichnet, dass**
das Führungsteil (25) und die Kolbenstange (14) schraubverbunden sind.

21. Spindelmotor nach einem der vorangegangenen Ansprüche,
**dadurch gekennzeichnet, dass**
zur formschlüssigen Verbindung des Führungsteils (25) und der Kolbenstange (14) Spannmittel vorgesehen sind, insbesondere Spannstifte.

22. Spindelmotor nach einem der vorangegangenen Ansprüche,
**dadurch gekennzeichnet, dass**
die Spannmittel in einer Bohrung des Führungsteils (25) klemmend gehalten sind, insbesondere zur Erzeugung von Spielfreiheit bei der formschlüssigen Verbindung.

23. Spindelmotor nach einem der vorangegangenen Ansprüche,
**dadurch gekennzeichnet, dass**
die Spannmittel tangential ausgerichtet vorgesehen sind, insbesondere zum Verdrehsichern der Kolbenstange (14) gegen das Führungsteil (25).

24. Spindelmotor nach einem der vorangegangenen Ansprüche,
**dadurch gekennzeichnet, dass**
die Kolbenstange (14) an ihrer zur Umgebung hin vorgesehenen Oberfläche glatt ausgeführt ist.

## Claims

1. A spindle motor,
comprising an electric motor with a rotor which is connected to a threaded spindle (5), the thread of which is engaged with a thread of a spindle nut (6) which is connected to a piston rod (14),
the spindle nut (6) with piston rod (14) being axially guided in a housing part,
with a guidance part being connected to the spindle nut (6) and the piston rod (14) for axial guidance,
**characterised in that**
a lubricant pump is integrated in the threaded spindle (5) such that the threaded spindle (5) also operates, together with other components, as a lubricant pump,
**in that** the lubricant pump comprises, on the end of the threaded spindle (5) remote from the motor, a valve which is connected to a lubricant duct arranged in the threaded spindle (5), in particular with a lubricant duct composed of at least one lubricant bore (23),
the valve being provided between an inlet opening and the first end of a lubricant duct, in particular within the threaded spindle (5),
with an oil bath being provided in the interior of the spindle motor, in particular in the spindle region, on the output side of the electric motor, into which bath the inlet opening opens,
the lubricant duct, at least with its second end, opening between a seal and a bearing, in particular so that lubricant is supplied to the seal and the bearing.

2. A spindle motor according to one of the preceding claims, **characterised in that** the valve comprises at least one ball (12) pressed by a spring against an opening.

3. A spindle motor according to one of the preceding claims, **characterised in that** the lubricant duct, at least with its second end, opens in the region of the seal such that lubricant is supplied to the seal.

4. A spindle motor according to one of the preceding claims, **characterised in that** at least one high-pressure seal is used for sealing, in particular between the spindle region and electric motor and/or between the spindle region and the surroundings.

5. A spindle motor according to one of the preceding claims, **characterised in that** a seal is provided between the spatial region of the electric motor and the spatial region in which the spindle nut (6) is arranged.

6. A spindle motor according to one of the preceding claims, **characterised in that** the seal is arranged axially between the bearing of the threaded spindle (5) and a coupling which connects the rotor shaft (2) and the threaded spindle (5).

7. A spindle motor according to one of the preceding claims, **characterised in that** the coupling is an axially insertable coupling.

8. A spindle motor according to one of the preceding claims, **characterised in that** the seal is embodied as a rotary shaft seal which has its seat in a housing part which also has a seat for receiving the bearing of the threaded spindle (5),
the running surface of the rotary shaft seal being provided on the threaded spindle (5).

9. A spindle motor according to one of the preceding claims, **characterised in that** the threaded spindle (5) has a shoulder for absorbing axial forces.

10. A spindle motor according to one of the preceding claims, **characterised in that** the shoulder is supported on the inner raceway of the bearing provided for the threaded spindle (5).

11. A spindle motor according to one of the preceding claims, **characterised in that** the piston rod (14) on the output side is sealed off by a lubricant-operated sealing arrangement towards the output-side housing part.

12. A spindle motor according to one of the preceding claims, **characterised in that** the sealing arrangement comprises at least one scraper, an O-ring and/or a groove seal.

13. A spindle motor according to one of the preceding claims, **characterised in that** a supporting means (8) is connected, in particular pressed-in, in the piston rod (14).

14. A spindle motor according to one of the preceding claims, **characterised in that** the supporting means (8) is formed as a substantially cylindrical recess, with an insertion slope (17) for threading-in the threaded spindle (5) being provided at its open end region.

15. A spindle motor according to one of the preceding claims, **characterised in that** the guidance part (25) is axially guided in the housing part via groove blocks, in particular groove blocks which are arranged in axially movable manner in a groove of the housing part.

16. A spindle motor according to one of the preceding claims, **characterised in that** the threaded spindle (5) with the rotor is also mounted in a housing part of the electric motor.

17. A spindle motor according to one of the preceding claims, **characterised in that** the rotor is connected without play to the threaded spindle (5).

18. A spindle motor according to one of the preceding claims, **characterised in that** in the region of the axial end positions, i.e. stops, of the guidance part (25) in each case an elastic element, in particular O-ring, is arranged for absorbing kinetic energy upon hitting the end position.

19. A spindle motor according to one of the preceding claims, **characterised in that** the guidance part (25) is connected to the piston rod (14) by means of a clamping connection.

20. A spindle motor according to one of the preceding claims, **characterised in that** the guidance part (25) and the piston rod (14) are screw-connected.

21. A spindle motor according to one of the preceding claims, **characterised in that** tensioning means are provided, in particular spring pins, for positive connection of the guidance part (25) and the piston rod (14).

22. A spindle motor according to one of the preceding claims, **characterised in that** the tensioning means are held in clamping manner in a bore in the guidance part (25), in particular for producing freedom of play upon the positive connection.

23. A spindle motor according to one of the preceding claims, **characterised in that** the tensioning means are provided tangentially oriented, in particular for securing the piston rod (14) against twisting against the guidance part (25).

24. A spindle motor according to one of the preceding claims, **characterised in that** the piston rod (14), on its surface provided towards its surroundings, is made smooth.

## Revendications

1. Moteur de broche,
comprenant un moteur électrique avec un rotor qui est relié à une broche filetée (5) dont le filetage est en prise avec un filetage d'un écrou de broche (6) relié à une tige de piston (14),
l'écrou de broche (6) avec la tige de piston (14) étant guidé axialement dans une partie de boîtier,
une pièce de guidage étant reliée à l'écrou de broche (6) et la tige de piston (14) pour le guidage axial,
**caractérisé en ce**
**qu'**une pompe à lubrifiant est intégrée dans la broche filetée (5) de manière que la broche filetée (5) fonctionne aussi comme pompe à lubrifiant conjointement avec d'autres composants,
la pompe à lubrifiant comprenant à l'extrémité de la broche filetée (5) éloignée du moteur une soupape qui est reliée à un canal de lubrifiant disposé dans la broche filetée (5), en particulier à un canal de lubrifiant composé d'au moins un perçage de lubrification (23),
la soupape étant prévue entre une ouverture d'entrée et la première extrémité d'un canal de lubrifiant, en particulier à l'intérieur de la broche filetée (5),
un bain d'huile, dans lequel débouche l'ouverture d'entrée, étant prévu à l'intérieur du moteur de broche, en particulier dans la zone de broche côté sortie du moteur électrique,
le canal de lubrifiant débouchant au moins par sa deuxième extrémité entre un joint et un palier, en particulier pour que du lubrifiant soit amené au joint et au palier.

2. Moteur de broche selon une des revendications précédentes,
**caractérisé en ce**
**que** la soupape comprend au moins une bille (12) pressée contre une ouverture par un ressort.

3. Moteur de broche selon une des revendications précédentes,
**caractérisé en ce**
**que** le canal de lubrifiant débouche au moins par sa deuxième extrémité dans la zone du joint de manière que du lubrifiant soit amené au joint.

4. Moteur de broche selon une des revendications précédentes,
**caractérisé en ce**
**qu'**au moins un joint haute pression est utilisé pour l'étanchéité, en particulier entre la zone de broche et le moteur électrique et/ou entre la zone de broche et l'environnement.

5. Moteur de broche selon une des revendications précédentes,
**caractérisé en ce**
**qu'**un joint est prévu entre la zone spatiale du moteur électrique et la zone spatiale dans laquelle l'écrou de broche (6) est disposé.

6. Moteur de broche selon une des revendications précédentes,
**caractérisé en ce**
**que** le joint est disposé axialement entre le palier de la broche filetée (5) et un accouplement reliant l'arbre de rotor (2) et la broche filetée (5).

7. Moteur de broche selon une des revendications précédentes,
**caractérisé en ce**
**que** l'accouplement est un accouplement à emmanchement axial.

8. Moteur de broche selon une des revendications précédentes,
**caractérisé en ce**
**que** le joint est réalisé sous la forme d'une garniture étanche d'arbre qui a son siège dans une partie de boîtier qui présente aussi un siège pour recevoir le palier de la broche filetée (5),
la surface de roulement de la garniture étanche d'arbre étant prévue sur la broche filetée (5).

9. Moteur de broche selon une des revendications précédentes,
**caractérisé en ce**
**que** la broche filetée (5) présente un épaulement pour absorber les efforts axiaux.

10. Moteur de broche selon une des revendications précédentes,
**caractérisé en ce**
**que** l'épaulement repose sur la bague intérieure du palier prévu pour la broche filetée (5).

11. Moteur de broche selon une des revendications précédentes,
**caractérisé en ce**
**que** la tige de piston (14) est rendue étanche par rapport à la partie de boîtier côté sortie par un dispositif d'étanchéité alimenté en lubrifiant.

12. Moteur de broche selon une des revendications précédentes,
**caractérisé en ce**
**que** le dispositif d'étanchéité comprend au moins un racleur, un joint torique et/ou une bague d'étanchéité.

13. Moteur de broche selon une des revendications précédentes,
**caractérisé en ce**
**qu'**un élément d'appui (8) est relié, en particulier inséré à force dans la tige de piston (14).

14. Moteur de broche selon une des revendications précédentes,
**caractérisé en ce**
**que** l'élément d'appui (8) est réalisé sous la forme d'un évidement essentiellement cylindrique, un chanfrein d'introduction (17) pour l'insertion de la broche filetée (5) étant prévu dans la zone d'extrémité ouverte.

15. Moteur de broche selon une des revendications précédentes,
**caractérisé en ce**
**que** la pièce de guidage (25) est guidée axialement dans la partie de boîtier par des coulisseaux, en particulier des coulisseaux qui sont disposés de manière à pouvoir se déplacer axialement dans une rainure de la partie de boîtier.

16. Moteur de broche selon une des revendications précédentes,
**caractérisé en ce**
**que** la broche filetée (5) avec le rotor est aussi logée dans une partie de boîtier du moteur électrique.

17. Moteur de broche selon une des revendications précédentes,
**caractérisé en ce**
**que** le rotor est relié sans jeu à la broche filetée (5).

18. Moteur de broche selon une des revendications précédentes,
**caractérisé en ce**
**qu'**un élément élastique, en particulier un joint torique, est disposé dans la zone de chacune des positions axiales extrêmes, donc des butées, de la pièce de guidage (25) pour absorber l'énergie cinétique à l'atteinte des positions extrêmes.

19. Moteur de broche selon une des revendications précédentes,
**caractérisé en ce**
**que** la pièce de guidage (25) est reliée à la tige de piston (14) au moyen d'une liaison par serrage.

20. Moteur de broche selon une des revendications précédentes,
**caractérisé en ce**
**que** la pièce de guidage (25) et la tige de piston (14) sont reliées par vissage.

21. Moteur de broche selon une des revendications précédentes,
**caractérisé en ce**
**que** des moyens de serrage, en particulier des goupilles de serrage, sont prévus pour la liaison par complémentarité de formes de la pièce de guidage (25) et de la tige de piston (14).

22. Moteur de broche selon une des revendications précédentes,
**caractérisé en ce**
**que** les moyens de serrage sont maintenus en serrage dans un perçage de la pièce de guidage (25), en particulier pour produire l'absence de jeu lors de la liaison par complémentarité de formes.

23. Moteur de broche selon une des revendications précédentes,
**caractérisé en ce**
**que** les moyens de serrage sont prévus en alignement tangentiel, en particulier pour empêcher la rotation de la tige de piston (14) par rapport à la pièce de guidage (25).

24. Moteur de broche selon une des revendications précédentes,
**caractérisé en ce**
**que** la tige de piston (14) est réalisée lisse sur sa surface prévue en direction de l'environnement.
